# EUROPEAN PATENT SPECIFICATION

(11) **EP 1 474 885 B1**
(45) Date of publication and mention of the grant of the patent: **03.05.2006**
(21) Application number: 03702742.2
(22) Date of filing: 10.02.2003
(51) Int. Cl.: H04J 14/02

(54) **WAVELENGTH DIVISION MULTIPLEX OPTICAL TELECOMMUNICATIONS NETWORK**
OPTISCHES WELLENLÄNGENMULTIPLEX-ÜBERTRAGUNGSNETZWERK
RESEAU DE TELECOMMUNICATIONS OPTIQUES A MULTIPLEXAGE PAR REPARTITION EN LONGUEUR D'ONDE (MRL)

(30) Priority: 08.02.2002 GB 0203037
(43) Date of publication of application: 10.11.2004
(73) Proprietor: Marconi UK Intellectual Property Ltd, Coventry, CV3 1HJ (GB)
(72) Inventor: WOOD, Nigel, Paynters Wood Bungalow, Brackley, Northants NN13 5SB (GB); CUSH, Rosemary, The Sundial, Northampton NN3 3LL (GB); SHAW, Nicola, Abington, Northampton NN1 4RH (GB)
(74) Representative: Collier, Ian Terry
(86) International application number: PCT/GB2003/000572
(87) International publication number: WO 2003/067796

(56) References cited:
- LEISCHING P ET AL: "ALL-OPTICAL-NETWORKING AT 0.8 TB/S USING RECONFIGURABLE OPTICAL ADD/DROP MULTIPLEXERS" IEEE PHOTONICS TECHNOLOGY LETTERS, IEEE INC. NEW YORK, US, vol. 12, no. 7, July 2000 (2000-07), pages 918-920, XP000968704 ISSN: 1041-1135
- MIYATA H ET AL: "Fully dynamic and reconfigurable optical add/drop multiplexer on 0.8 nm channel spacing using AOTF and 32-wave tunable LD module" OPTICAL FIBER COMMUNICATION CONFERENCE, TECHNICAL DIGEST POSTCONFERENCE EDITION. TRENDS IN OPTICS AND PHOTONICS VOL.37 (IEEE CAT. NO. 00CH37079), pages 287-289 vol.4, XP001147237 March 2000, Washington, DC, USA ISBN: 1-55752-630-3
- STOLL D ET AL: "METROPOLITAN DWDM: A DYNAMICALLY CONFIGURABLE RING FOR THE KOMNET FIELD TRIAL IN BERLIN" IEEE COMMUNICATIONS MAGAZINE, IEEE SERVICE CENTER. PISCATAWAY, N.J, US, vol. 39, no. 2, 1 February 2001 (2001-02-01), pages 106-113, XP001006742 ISSN: 0163-6804
- DINGEL B B ET AL: "PHOTONIC ADD-DROP MULTIPLEXING PERSPECTIVE FOR NEXT GENERATION OPTICAL NETWORKS" PROCEEDINGS OF THE SPIE, SPIE, BELLINGHAM, VA, US, vol. 4532, 2001, pages 394-408, XP009007872

## Description

This invention relates to wavelength division multiplex (WDM) optical telecommunications network and more especially to a re-configurable WDM telecommunications network.

As is known, WDM optical telecommunications network comprise a plurality of spatially disposed nodes which are interconnected by optical fibre waveguides. Communication traffic is communicated between the nodes by optical radiation modulated by the communication traffic which is conveyed by the optical fibres.

Optical radiation in the context of the present invention is defined as electromagnetic radiation having a free-space wavelength of 500nm to 3000nm, although a free-space of 1530nm to 1570nm is a preferred part of this range. In wavelength division multiplexing, the optical radiation is partitioned into a plurality of discrete non-overlapping wavebands, termed wavelength channels or optical channels, and each wavelength channel is modulated by a respective communication channel.

The connectivity between nodes, in terms of the routing of communication traffic, is determined by the waveband (wavelength) of the wavelength channel. Typically a single wavelength channel is ascribed to uniquely define a given connection between two nodes though it is known to use more than one wavelength channel for the same connection to increase transmission capacity.

One network topography, a ring configuration, is one in which the nodes are connected by the optical fibres in a point-to-point serial manner to form an unbroken (closed) loop or ring configuration. At each node one or more drop optical (wavelength selective) filters are connected in series within the optical fibre ring and each removes (drops) a single wavelength channel from the WDM radiation passing around the ring whilst allowing the remainder of the wavelength channels to pass substantially unattenuated. Additionally, at each node, wavelength channels can be added to enable communication with other nodes.

WDM network configurations can comprise a full mesh in which every node, in terms of wavelength channel connection, is connectable to every other node, hub networks in which one node, termed a hub, is connected to every other node or linear networks in which nodes are connected in linear manner.

In general optical ring networks can be divided into passive networks which do not include optical amplification within the ring or at the nodes and active networks which include optical amplifiers (typically Erbium doped fibre amplifiers EDFAs) to compensate for loss within the network. The former are typically limited to a few tens of kilometres around the ring and are often used as part of local area networks, and are termed "metro" (metropolitan) networks. In order to keep cost to a minimum metro networks are generally non re-configurable (i.e. fixed wavelength allocation) systems in which the interconnection of nodes, which is determined by the wavelength channel allocation, is fixed from installation of the system. The PMM series of networks sold by Marconi Communications Limited of Coventry, England is an example of a non re-configurable metro network and is of the order of 10-200 km in circumference. The larger end of the range is an active network including EDFA amplification. The smaller end of the range is a passive network. In such a network wavelength channels are dropped at respective nodes using drop filters (dielectric interference filters) which have a fixed wavelength passband corresponding to the waveband of the wavelength channel it is designed to drop. Since the drop filters have a fixed wavelength characteristic, the wavelength channel allocation, and hence interconnection of nodes, cannot be re-configured. The only way to re-configure such a system would be to physically change the drop filters at each node, requiring a site attendance which is both time consuming and expensive. This is a notable disadvantage since metro networks are typically installed in locations such as business parks and large office blocks where there is frequently a need to re-configure the network, for example to change the transmission capacity of interconnections or to add or remove users.

Re-configurable WDM optical telecommunications networks are also known in the art. One example is the PMA32 network produced by Marconi Communications Limited of Coventry, England. This network is a thirty two wavelength channel network that is fully re-configurable in that each node can be remotely re-configured to selectively add and/or drop any one of the thirty two wavelength channels. Such Re-configurability is achieved through the use of wavelength tuneable drop filters and wavelength tuneable optical transmitters for adding channels.

Fully re-configurable WDM networks are ideally suited for large networks, for example regional networks or networks handling traffic for a large city, though they are costly since every node has to have hardware which is capable of handling (dropping and/or adding) each of the wavelength channels supported by the network.

Although a fully re-configurable network, such as those described above, could be used in the metro environment, the cost would be prohibitively expensive and would also give a degree of flexibility beyond that which is usually required.

Document "ALL-OPTICAL-NETWORKING AT 0.8 TB/S USING RECONFIGURABLE OPTICAL ADD/DROP MULTIPLEXERS" by LEISCHING P ET AL, IEEE PHOTONICS TECHNOLOGY LETTERS, IEEE INC. NEW YORK, US, vol. 12, nr. 7, July 2000, pages 918-920, XP000968704, discloses a network according to the preamble of claim 1.

The inventors have appreciated that a need exists therefore for a WDM network which is at least partially re-configurable and which is economically viable for use in the metro environment.

In its broadest form, the invention resides in at least some of the nodes being configured to drop a fixed subset of the total number of wavelength channels supported by the WDM network and additionally having the capability of being able to selectively add any of the remaining wavelength channels.

More specifically, according to a first aspect of the invention there is provided a wavelength division multiplex (WDM) optical telecommunications network comprising a plurality of nodes interconnected by optical fibre waveguides, in which communication traffic is communicated between nodes by optical radiation modulated with the communication traffic, said radiation being partitioned into a plurality (N) of wavelength channels each channel having a discrete non-overlapping waveband (λ₁ to λ_{N}), wherein each node includes means for dropping at least one of the wavelength channels to thereby define a connection to said node and includes means for adding at least one wavelength channel to the network to define a connection to another node of the network, wherein at least one node having ascribed to it a fixed subset (Mᵢ) of the N wavelength channels, the channels of the subset being the only channels that can be dropped at the node, and including means for dropping each of the wavelength channels of the fixed subset (Mᵢ) from the network; and wavelength selectable means capable of adding one or more of at least any of the remaining wavelength channels other than the subset to the network to define a connection to another node of the network.

The present invention provide the advantage of a low-cost partially re-configurable network which is particularly suited to metro type networks which can be ring type or linear. However, the invention is also applicable to other network types.

Advantageously every node has ascribed to it a respective fixed subset of the total wavelength channels, the channels of the respective subset being the only channels that can be dropped at the respective node, and includes means for dropping each of these wavelength channels from the network; and every node further includes wavelength selectable means for adding one or more of at least any of the remaining wavelength channels other than the respective subset to the network.

The means for adding the one or more wavelength channels preferably includes at least one wavelength selectable transmitter. Advantageously the, or each, wavelength selectable transmitter is wavelength selectable to transmit on any of the N wavelengths supported by the network. Such an arrangement enables the same transmitter to be used at any node of the network. Advantageously the, or each, wavelength selectable transmitter comprises a tuneable laser such as a multi-stage wavelength tuneable laser. Preferably, the, or each, transmitter further comprises a variable optical attenuator (VOA) for controlling the power of the wavelength channel. Such an arrangement can be further set to maximum attenuation during wavelength tuning. The use of wavelength tuneable transmitters, which can be adjusted remotely, enables re-configuration of the network without the need for on-site engineers. This greatly reduces network maintenance costs.

In one configuration the wavelength channels of the fixed subset are contiguous and comprise a band of consecutive wavelength channels. Such an arrangement is beneficial in that the means for dropping the subset of wavelength channels can then conveniently comprise a broadband drop filter.

In an alternative configuration WDM network according the wavelength channels of the subset comprise a plurality of discrete wavelength channels which are non-contiguous. Preferably the means for dropping the subset of wavelength channels then comprises one or more fixed wavelength selective filters. In one arrangement the one more filters are configured to drop every Q^{th}, where Q> 1, wavelength channel.

Advantageously the node further comprises means for separating the respective wavelength channels of the subset. Such means can comprises a de-multiplexer such as an array waveguide grating or alternatively an multi-way (m-way) splitter and m optical filters to select a respective one of the wavelength channels of the subset.

Preferably the number of wavelength channels that can be added at the node is equal to the number of wavelength channels dropped at the node.

The network of the present invention finds particular application to a network in which the nodes are interconnected in a ring configuration.

Embodiments of the invention will now be described, by way of example only, with reference to the accompanying drawings, in which:
Figure 1 shows a node in accordance with a first embodiment of the invention for use in a WDM optical telecommunications network;
Figure 2 shows a node in accordance with a second embodiment of the invention;
Figure 3a shows a node in accordance with a third embodiment of the invention;
Figure 3b shows an alternative implementation of the node of Figure 3a;
Figure 4a shows a node in accordance with the invention with a sub-ring subtending from the node;
Figure 4b shows an alternative realisation of the embodiment of Figure 4a;
Figure 4c shows a further alternative realisation of the embodiment of Figure 4a; and
Figure 5 shows a WDM ring telecommunications network embodying the invention.

Whilst each of the embodiments of the present invention to be described are primarily intended for use in metro WDM telecommunications network, passive or active, it should be understood that the invention is equally applicable to any type of WDM network such as regional ring networks or linear networks. In general metro networks have a ring configuration in which the nodes are serially connected by optical fibres to form a closed loop or ring. The network can be protected or unprotected. In a protected network the nodes are connected by two separate optical fibre rings and WDM radiation is transmitted around the rings in clockwise and counter-clockwise directions respectively. As is known such an arrangement ensures a protection path is available in the event of a fibre break occurring. In the following description of the invention, and for the sake of brevity, an unprotected network is described in which there is only a single optical fibre connection between the nodes. The skilled person will, however, appreciate that the invention can be readily applied to a protected network.

All the embodiments to be described provide a partially re-configurable WDM network. The WDM network of the invention comprises n nodes and has N wavelength channels (λ₁ to λ_{N}). At least one, preferably all, of the node/s i (i=1 to n) has ascribed to it a fixed subset Mᵢ of the total N wavelengths channels carried by the network and includes means for dropping each of these fixed wavelength channels from the network. The subset ascribed to each node is unique to the node and comprises a plurality of wavelength channels. Additionally this/these node/s is/are capable of selectively adding any of the remaining N wavelength channels other than the subset of wavelength channels being dropped at the node (addition at a node of one of the wavelength channel which is one of the subset would define a connection to the same node). The subset Mᵢ of wavelength channels dropped at each of these nodes remains fixed and thus defines a fixed number m (equal to the number of wavelength channels in the subset Mᵢ) of connections to the node. The ability to be able to selectively add any of the remaining wavelength channels enables connections between nodes to be re-configured. A connection to a given node is established by selecting one of wavelength channels of the subset Mᵢ of the given node. Since number m of possible connections to each node is fixed, the system is partially re-configurable. Such a system is much cheaper than a fully re-configurable network since each node need only include hardware capable of dropping a fixed subset Mᵢ of the total number of wavelength channels.

In each of the embodiments, the subset Mᵢ of wavelength channels preferably comprises groupings of consecutive (adjacent) wavelength channels (i.e. bands of wavelength channels) thereby enabling the use of broadband filters to drop the subset of wavelength channels at each node. These filters may be dielectric filters or fibre Bragg grating filters for example. A series of filters could be used in place of a broadband filter though this is not favoured as-the optical insertion losses (express path loss through the node) are too high. The wavelength channels of the subset can alternatively comprise different groupings of non-consecutive channels.

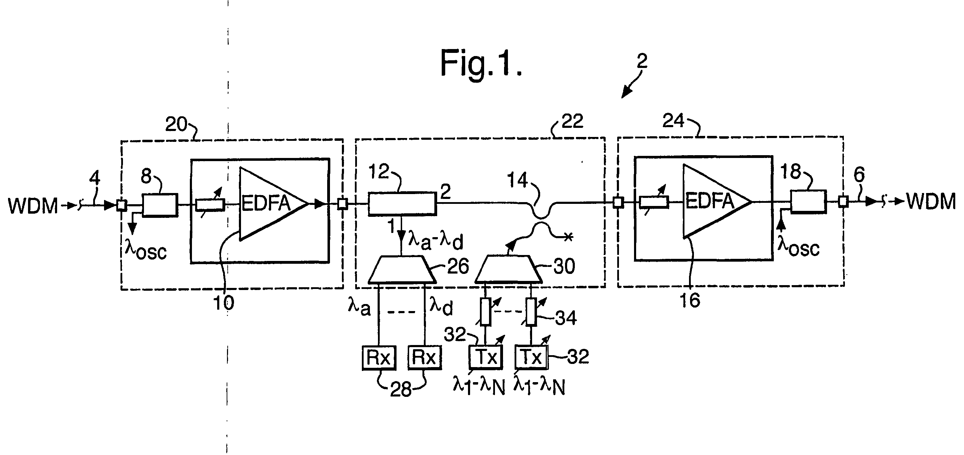

Figure 1 shows a network node 2 embodying the invention. The node 2 is intended, for example, for use in a thirty two (N=32) wavelength channel (λ₁ to λ₃₂) WDM metro ring network operating at C-band (1530-1560nm). In this embodiment, and in each of the following embodiments an optical supervisory channel (OSC) λ_{osc}=1510nm is used to support inter-node communications for network control and administration purposes. As is known the OSC does not carry communication traffic. Inter-node communications can alternatively be achieved by use of in-band management channels or by other means.

The node 2 comprises, serially connected between a network optical fibre 4 for receiving WDM radiation at the node and a network optical fibre 6 for outputting WDM radiation: a three port filter 8 for dropping the OSC, an optical amplifier (EDFA) 10, an optical drop filter 12, an optical coupler 14 for enabling wavelength channels to be added at the node 2, a second optical amplifier (EDFA) 16, and a second coupler 18 for adding the OSC to the WDM radiation output along the optical fibre 6. The OSC is dropped before the input of the EDFA 10 and added after the output of the EDFA 16 to maintain inter-node communication in the event of failure of either of the EDFAs. The optical amplifiers 10 and 16 compensate for inter-node radiation losses which are caused, for example, by optical fibre losses, filters, connectors and other components present in the optical path inter-connecting the nodes. Such optical amplification is of course optional and would be omitted in a passive network.

For ease of manufacture the three port filter 8 and the first optical amplifier 10 are located on a receive (RX) line card 20; the optical drop filter 12 and coupler 14 are located on a card 22; and the optical amplifier 16 and the optical coupler are located on a transmit (TX) line card 24. The cards 20, 22, 24 are denoted by dashed lines in the Figure.

The optical drop filter 12 is preferably a three port filter and is configured to drop a fixed subset Mᵢ of the total number of wavelength channels N to a first optical output port whilst allowing the remainder of the wavelength channels to pass substantially unattenuated to a second optical output port which is connected to a first input of the coupler 14. The filter 12 is a broadband filter having a fixed wavelength characteristic which drops a number m, four in this example, consecutive (adjacent/neighbouring) wavelength channels Mᵢ=λₐ, to λ_{d}.

The card 22 additionally includes an optical de-multiplexer 26 (array waveguide grating AWG) whose input is connected to the first output of the optical drop filter 12 and which passively separates the subset M; of wavelength channels (λₐ to λ_{d}) into respective channels and routes each wavelength channel (λₐ to λ_{d}) along a respective optical path to a respective receiver 28. Moreover the card 22 includes a passive multi-input (p-way) optical combiner 30 (cascaded fused fibre coupler) for combining wavelength channels generated by a plurality p of optical transmitters 32. The output of the combiner 30 is connected to a second input of the optical coupler 14 which adds the radiation from the transmitters 32 to the WDM radiation passing through the node.

Typically the transmitters 32 comprise wavelength tuneable lasers which are capable of operating at any of the N wavelengths (λ₁ to λ_{N}) of the network. (Although it is unlikely that the transmitters will ever operated at any of the wavelengths of the respective subset Mᵢ it is preferred that each is capable of operation at all N wavelengths to enable the use of a single transmitter at any node). Each transmitter 32 preferably includes a variable optical attenuator (VOA) 34 for controlling the power of the wavelength channel being added to the network. Additionally each VOA 34 is preferably set to maximum attenuation during tuning, power-up and down of the laser to prevent output radiation being added to the network.

In operation the optical filter 12 drops the fixed subset Mᵢ of the N wavelength channels and routes them to the de-multiplexer 26. The de-multiplexer 26 separates this subset into the m separate wavelength channels which are then received by their respective receiver 28. Additionally up to p wavelength channels can added to the network by means of the transmitters 32 to define connections to other nodes of the network. Since the wavelength of channels added by the node can be re-configured, by wavelength tuning the transmitters, this enables interconnection to other nodes to be at least partially re-configured.

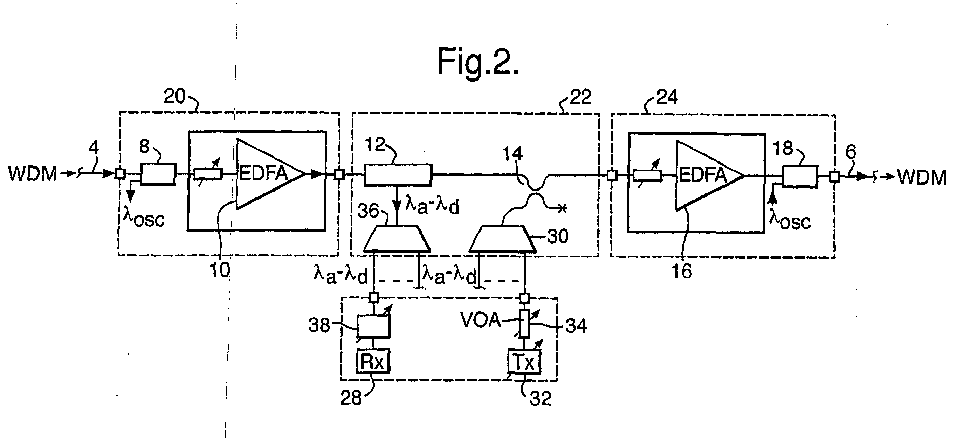

The embodiment of Figure 2 is similar to that of Figure 1 and like components carry the same reference numerals. However, the optical de-multiplexer 26 is replaced by a passive multi- way (m-way) optical splitter 36 (cascaded fused fibre coupler) which divides radiation applied to its input equally between its m outputs. Each of the outputs of the splitter 36 contains each of the m wavelength channels dropped by the broadband drop filter 12 and each is applied to a respective wavelength selective filter 38. The wavelength selective filter is used to select a respective one of the m wavelength channels for reception by a respective receiver 28. Conveniently the filters 38 can be wavelength tuneable enabling a different receiver to be configured to receive a given wavelength channel. Such a capability is useful in the event of failure of a receiver.

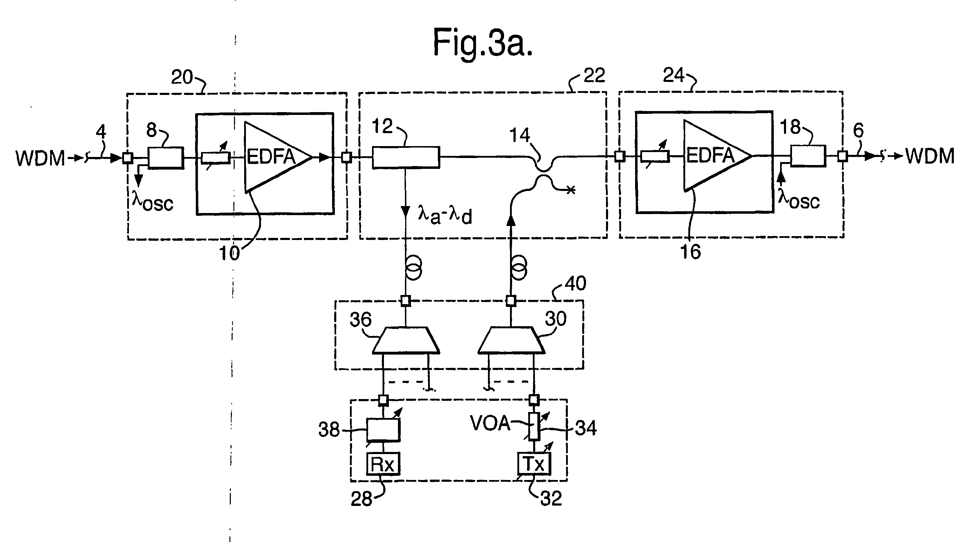

The embodiment of Figure 3a is identical to that of Figure 2 except that the passive optical splitter 36 and the multiplexer 30 are arranged remote from the card 22 on a remote card 40. This arrangement is suitable where it is intended to locate the transmitters and receivers at a position remote from the node. Likewise it will be appreciated that the de-multiplexer 26 of Figure 1 can be remotely located in a like manner.

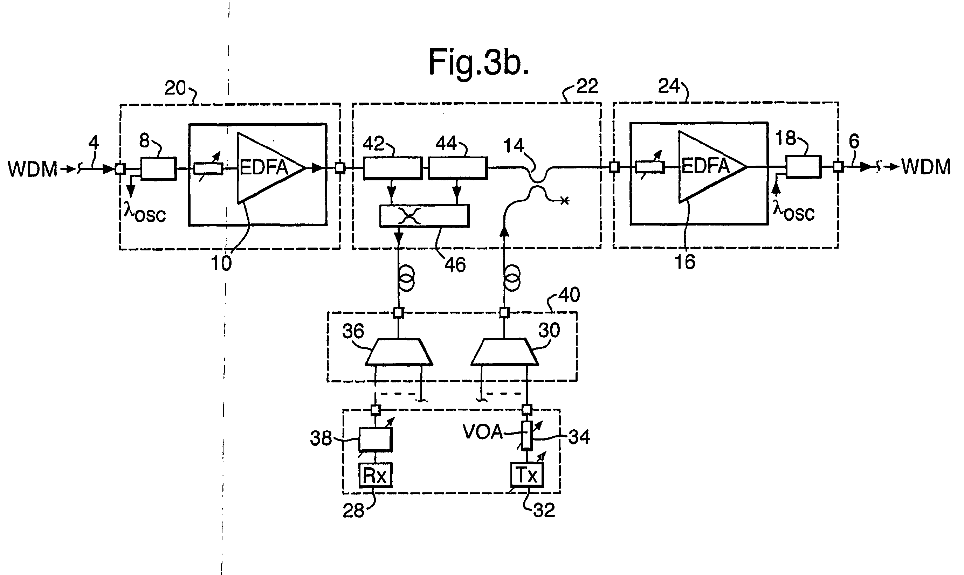

In Figure 3b, the broadband drop filter 12 is replaced with two or more wavelength selective filters 42, 44 and a passive optical combiner (cascaded fused fibre coupler) 46 which combines the outputs of two or more filters 42, 44. Such a filter arrangement is suited where the subset Mᵢ of wavelength channels does not comprise a band of consecutive wavelength channels.

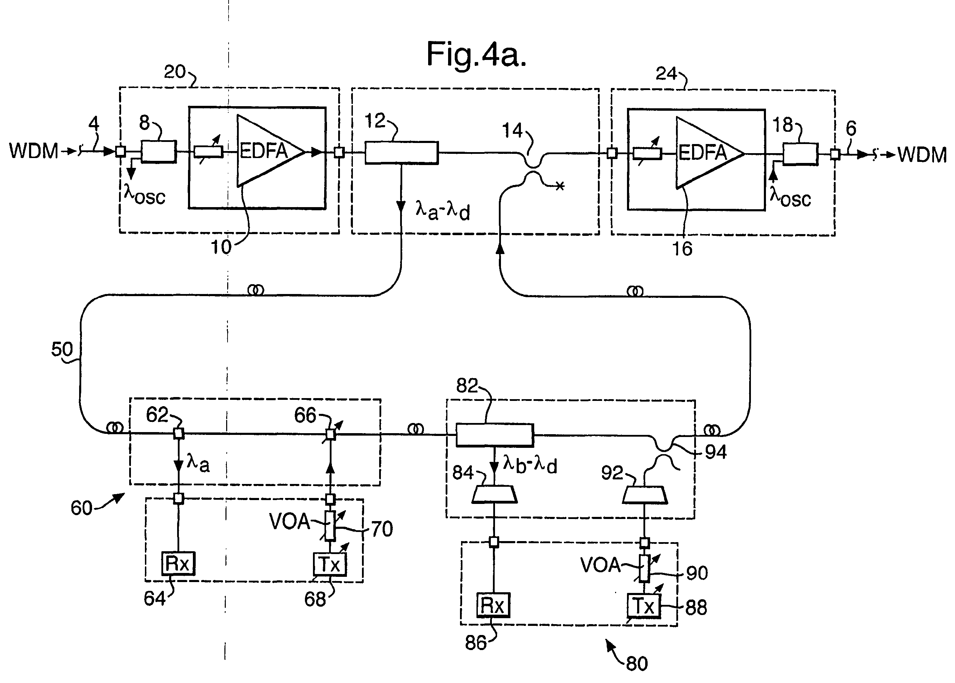

In the embodiment of Figure 4a, the node drops the m (λₐ to λ_{d}) wavelength channels to a sub-ring 50 subtended from the node, which is part of a main network ring. The subtended ring 50 has a number of nodes, here two, each of which can drop out one or more of the m wavelengths supported-by the sub-ring. Thus, in Figure 4a, a first sub-node 60 of the subtended ring 50 has a drop filter 62 which drops out a single one (λₐ) of the m wavelength channels to a receiver 64. Additionally the node 60 includes a tuneable add filter 66 for adding a wavelength channel from a tuneable laser transmitter 68 back onto the subtended ring. A VOA 70 is placed between the transmitter 68 and the add filter 66 for reasons discussed previously. The tuneable laser transmitter 68 can transmit signals at any of the N wavelengths supported by the N channel network to enable communication with other nodes of the main network.

A second sub-node 80 on the subtended ring 60 includes a further broadband drop filter 82 which can drop out a subset (λ_{b} to λ_{d}) of the m channels supported by the subtended ring. The output of the filter is passed to a de-multiplexer 84 which has outputs corresponding to the individual wavelength channels dropped by the broadband filter 82 (only one is shown in Figure 4a). Each of these wavelength channels can be received by a respective receiver 86.

As in the previous examples, the de-multiplexer 84 can be replaced by a passive optical splitter and tuneable or fixed wavelength filters. However, these are not preferred as they are more lossy than the de-multiplexer arrangement. This additional loss, together with the fibre loss of the subtended ring makes the approach less advantageous than using a de-multiplexer.

Additionally the sub-node 80 includes one or more tuneable laser transmitters 88, which have associated VOAs 90, and which provide one or more channels to a passive optical combiner 92 whose output is coupled back onto the subtended-ring-by a coupler 94. As before, the transmitter can be tuned to transmit at any of the N channels supported by the network as discussed in previous examples.

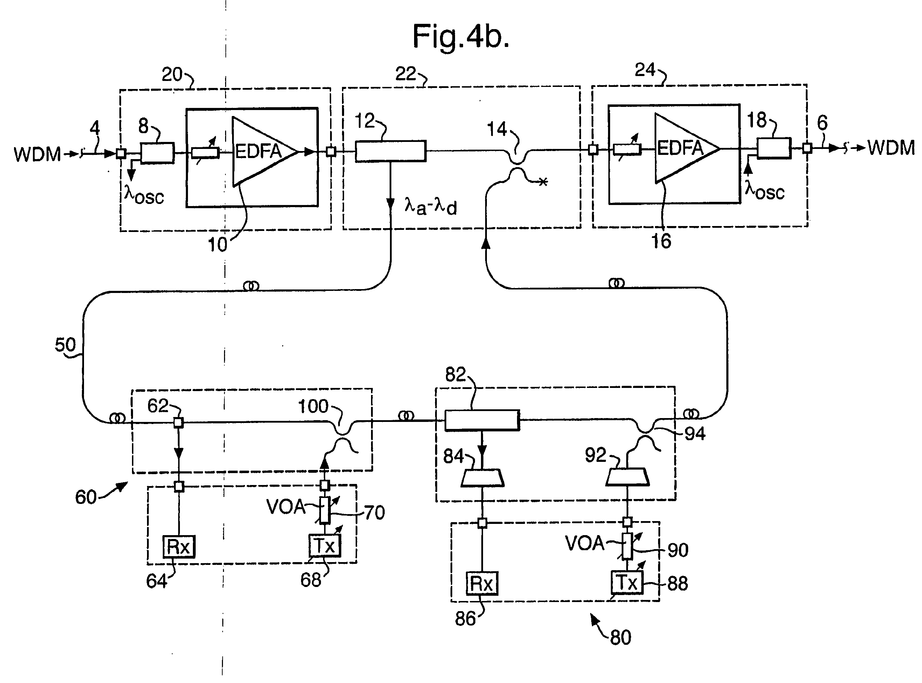

Figure 4b shows a variant of the subtended ring of Figure 4a in which the tuneable add filter 66, used for adding the wavelength tuneable channel onto the subtended ring, is replaced by a passive optical coupler 100.

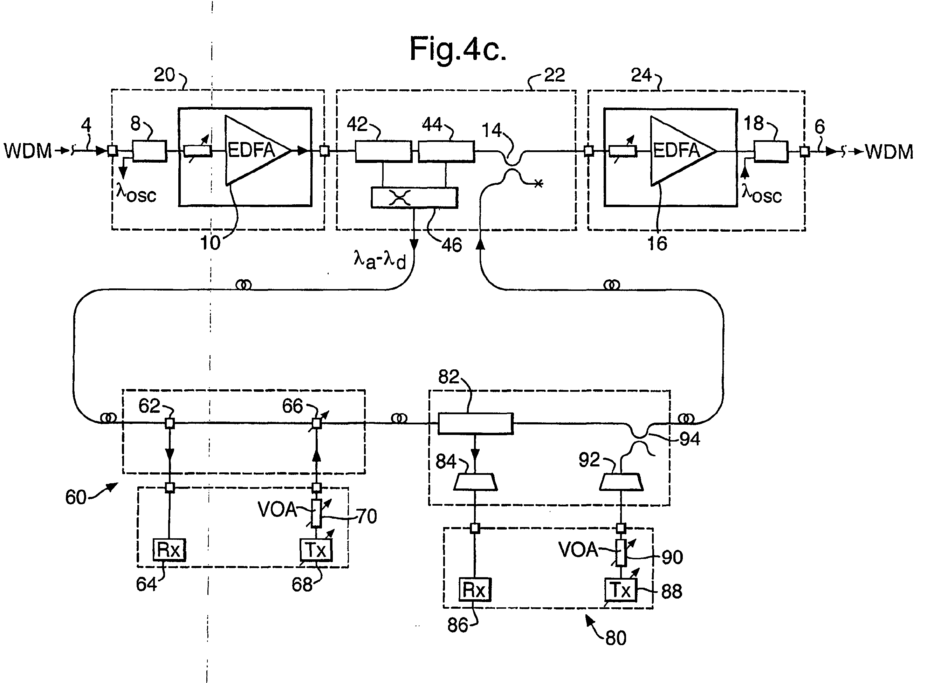

Figure 4c shows a further variant in which the broadband drop filter 12 is replaced by two or more separate filters 42, 44 and an optical combiner 46 in a manner similar to that of Figure 3b.

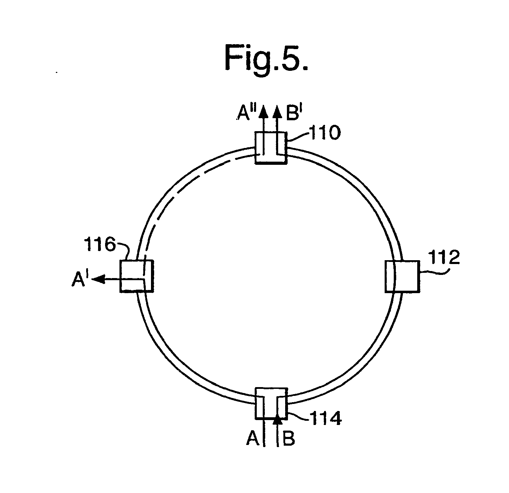

Figure 5 shows an example of a thirty two wavelength channel (λ₁ to λ₃₂) WDM ring network comprising four nodes (i=1 to 4) 110, 112, 114, 116. Each node is assigned a fixed subset Mᵢ of wavelength channels that it drops from the ring in this example each drops eight of the thirty two wavelength channels. The first node 110 is ascribed the wavelength channel subset M₁=λ₁ to λ₈, the second node 112 the subset M₂=λ₉ to λ₁₆, the third node 114 the subset M₃=λ₁₇ to λ₂₄, and the fourth node the subset M₄=λ₂₅ to λ₃₂. It follows from the foregoing description that each node includes means (drop filter) for dropping the eight wavelength channels ascribed to the node. It also follows that since each node is capable of adding wavelength channels corresponding to at least any of the remaining wavelength channels, each node can communicate with all the other nodes at any of their wavelengths.

The embodiments of the invention described provide a low cost partially re-configurable WDM network in which a fixed number of wavelength channels are dropped out at each node and in which each node can transmit at any of the other wavelengths supported by the network. Such a network is highly advantageous, particularly in the metro environment in which the network frequently requires re-configuring. Moreover, re-configuration can be done remotely. For example, the tuneable lasers can be adjusted from a remote management terminal on the network utilising, for example, the optical supervisory channel. This greatly reduces the time delay and cost of re-configuring the network but without incurring hardware costs associated with the prior art fully re-configurable networks in which any of the wavelengths can be dropped at any of the nodes.

Various modifications are possible within the scope of the invention. For example, the subset of wavelength channels dropped at respective nodes can either be a band of consecutive wavelength channels, as in the examples described above, or be a grouping of non-consecutive wavelength channels. In the case of the latter, for example, every fourth wavelength channel can be selected using an interleaving type filter.

It will be appreciated that the transmitters can comprise a single tuneable transmitter or a plurality of fixed wavelength transmitters. In the embodiments described, the transmitters can transmit to all N wavelengths supported by the network. However, as described this is not essential. Alternatively each transmitter can cover a subset of the N wavelengths, for example, where the likely network configurations fall into an appropriate subset of the total.

Typically, the number m of wavelengths dropped at a node will in general equal the number p of wavelength channels added at the node. However, this may not always be the case where bi-directional traffic is not always required, or where the bi-directional traffic is of a different nature in the two directions.

## Claims

1. A wavelength division multiplex WDM optical telecommunications network comprising a plurality of nodes (2) interconnected by optical fibre waveguides (4, 6) in which communication traffic is communicated between nodes by optical radiation modulated with the communication traffic, said radiation being partitioned into a plurality N of wavelength channels each channel having a discrete non-overlapping waveband (λ₁ to λ_{N}), wherein each node (2) includes means for dropping at least one of the wavelength channels to thereby define a connection to said node (2) and includes means for adding at least one wavelength channel to the network to define a connection to another node (2) of the network, wherein at least one node (2) has ascribed to it a fixed subset Mᵢ of the N wavelength channels and includes means (12, 42, 44) for dropping each of the wavelength channels (λₐ to λ_{d}) of the fixed subset Mᵢ from the network; and wavelength selectable means (14, 30, 32, 34) capable of adding one or more of at least any of the remaining wavelength channels other than the subset Mᵢ to the network to define a connection to another node (2) of the network, **characterised by** the channels (λₐ to λ_{d}) of the subset Mᵢ being the only channels that can be dropped at the node (2).

2. A WDM network according to Claim 1 in which every node (2) has ascribed to it a respective fixed subset Mᵢ of the N wavelength channels, the channels (λₐ to λ_{d}) of the respective subset Mᵢ being the only channels that can be dropped at the respective node (2), and includes means for dropping each of these wavelength channels from the network; and every node (2) further includes wavelength selectable means for adding one or more of at least any of the remaining wavelength channels other than the respective subset Mᵢ to the network.

3. A WDM network according to Claim 1 or Claim 2, in which the means for adding the one or more wavelength channels includes at least one wavelength selectable transmitter (32).

4. A WDM network according to Claim 3, in which the, or each, wavelength selectable transmitter is wavelength selectable to transmit on any of the N wavelengths (λ₁ to λ_{N}) supported by the network.

5. A WDM network according to Claim 3 or Claim 4, in which the, or each, wavelength selectable transmitter comprises a tuneable laser.

6. A WDM network according to any of Claims 3 to 5, in which the, or each, transmitter further comprises a variable optical attenuator (VOA) for controlling the power of the wavelength channel.

7. A WDM network according to any preceding claim, in which the wavelength channels (λₐ to λ_{d}) of the fixed subset Mᵢ are contiguous and comprise a band of consecutive wavelength channels.

8. A WDM network according to Claim 7, in which the means for dropping the subset Mᵢ of wavelength channels (λₐ to λ_{d}) comprises a broadband drop filter.

9. A WDM network according to any one of Claims 1 to 6, in which the subset Mᵢ comprises a plurality of discrete wavelength channels (λₐ to λ_{d}).

10. A WDM network according to Claim 9, in which the means for dropping the subset Mᵢ wavelength channels λₐ to λ_{d} comprises one or more fixed wavelength selective filters (42, 44).

11. A WDM network according to Claim 10, in which the one more filters is adapted to drop every Q^{th}, where Q>1, wavelength channel.

12. A WDM network according to any preceding claim, and further comprising means (26,36,38) for separating the respective wavelength channels of the subset Mᵢ.

13. A WDM network according to Claims 12, in which the means for separating comprises a de-multiplexer (26).

14. A WDM network according to Claim 12, in which the means for separating comprises an m-way splitter (36) and m optical filters (38).

15. A WDM network according to any preceding claim, in which the number of wavelength channels that can be added at the node (2) is equal to the number m of wavelength channels dropped at the node (2).

16. A WDM network according to any preceding claim, in which the nodes (2) are interconnected in a ring configuration.

## Patentansprüche

1. Optisches Telekommunikationsnetzwerk im Wellenlängen-Multiplex WDM, welches eine Mehrzahl von Knoten (2) enthält, welche durch Lichtleitfasern (4,6) verbunden sind, in welchen ein Kommunikationsverkehr zwischen Knoten durch optische Ausstrahlung übertragen wird, welche mit dem Kommunikationsverkehr moduliert ist, wobei die Ausstrahlung in eine Mehrzahl N von Wellenlängen-Kanälen unterteilt ist, wobei jeder Kanal ein diskretes, nicht überlappendes Wellenband (□₁ bis □_{N}) hat, wobei jeder Knoten (2) ein Mittel zum Abwerfen von zumindest einem der Wellenlängen-Kanäle enthält, um somit eine Verbindung mit dem Knoten (2) zu bestimmen, und ein Mittel zum Hinzufügen von zumindest einem Wellenlängen-Kanal an das Netzwerk enthält, um eine Verbindung an einen weiteren Knoten (2) des Netzwerks zu bestimmen, wobei zumindest einem Knoten (2) eine festgelegte Teilmenge Mᵢ der N Wellenlängen-Kanäle zugeschrieben ist, und ein Mittel (12,42,44) zum Abwerfen jeder der Wellenlängen-Kanäle (□ₐ bis □_{d}) der festgelegten Teilmenge Mᵢ vom Netzwerk und ein Wellenlängen-Auswahlmittel (14,30,32,34) enthält, welches dazu angepasst ist, einen oder mehrere von zumindest jeglichen der verbleibenden Wellenlängen-Kanäle, welche sich von der Teilmenge Mᵢ unterscheiden, dem Netzwerk hinzuzufügen, um eine Verbindung mit einem weiteren Knoten (2) des Netzwerks zu bestimmen, **dadurch gekennzeichnet, dass** die Kanäle (□ₐ bis □_{d}) der Teilmenge Mᵢ die einzigen Kanäle sind, welche am Knoten (2) abgeworfen werden können.

2. WDM-Netzwerk nach Anspruch 1, bei welchem jedem Knoten (2) eine jeweilige festgelegte Teilmenge Mᵢ der N Wellenlängen-Kanäle zugeschrieben ist, wobei die Kanäle (□ₐ bis □_{d}) von der jeweiligen Teilmenge Mᵢ die einzigen Kanäle sind, welche am jeweiligen Knoten (2) abgeworfen werden können, und ein Mittel zum Abwerfen jedes dieser Wellenlängen-Kanäle vom Netzwerk enthält, und bei welchem jeder Knoten (2) ferner ein Wellenlängen-Auswahlmittel enthält, um einen oder mehrere der zumindest jeglichen verbleibenden Wellenlängen-Kanäle, welche sich von der jeweiligen Teilmenge Mᵢ unterscheiden, dem Netzwerk hinzuzufügen.

3. WDM-Netzwerk nach Anspruch 1 oder Anspruch 2, bei welchem das Mittel zum Hinzufügen des einen oder der mehreren Wellenlängen-Kanäle zumindest einen Wellenlängen-Auswahl-Übertrager (32) enthält.

4. WDM-Netzwerk nach Anspruch 3, bei welchem der oder jeder Wellenlängen-Auswahl-Übertrager eine auswählbare Wellenlänge hat, um auf jeglichen der N Wellenlängen (□₁ bis □_{N}) zu übertragen, welche durch das Netzwerk unterstützt werden.

5. WDM-Netzwerk nach Anspruch 3 oder Anspruch 4, bei welchem der oder jeder Wellenlängen-Auswahl-Übertrager einen einstellbaren Laser enthält.

6. WDM-Netzwerk nach einem der Ansprüche 3 bis 5, bei welchem der oder jeder Übertrager ferner einen variablen optischen Abschwächer (VOA) zum Steuern der Leistung des Wellenlängen-Kanals enthält.

7. WDM-Netzwerk nach einem der vorhergehenden Ansprüche, bei welchem die Wellenlängen-Kanäle (□ₐ bis □_{d}) der festgelegten Teilmenge Mᵢ zusammenhängend sind und ein Band aus zusammenhängenden Wellenlängen-Kanälen enthalten.

8. WDM-Netzwerk nach Anspruch 7, bei welchem das Mittel zum Abwerfen der Teilmenge Mᵢ von Wellenlängen-Kanälen (□ₐ bis □_{d}) einen Breitband-Abwerf-Filter enthält.

9. WDM-Netzwerk nach einem der Ansprüche 1 bis 6, bei welchem die Teilmenge Mᵢ eine Mehrzahl von diskreten Wellenlängen-Kanälen (□ₐ bis □_{d}) enthält.

10. WDM-Netzwerk nach Anspruch 9, bei welchem das Mittel zum Abwerfen der Teilmenge Mᵢ von Wellenlängen-Kanälen (□ₐ bis □_{d}) einen oder mehrere festgelegte Wellenlängen-Auswahl-Filter (42,44) enthält.

11. WDM-Netzwerk nach Anspruch 10, bei welchem der eine oder die mehreren Filter dazu angepasst ist, jeden Q^{ten} Wellenlängen-Kanal, wobei Q > 1 ist, abzuwerfen.

12. WDM-Netzwerk nach einem der vorhergehenden Ansprüche, und welches ferner ein Mittel (26,36,38) zum Trennen der jeweiligen Wellenlängen-Kanäle der Teilmenge Mᵢ enthält.

13. WDM-Netzwerk nach Anspruch 12, bei welchem das Mittel zum Trennen einen De-Multiplexer (26) enthält.

14. WDM-Netzwerk nach Anspruch 12, bei welchem das Mittel zum Trennen einen m-Wege-Splitter (36) und m optische Filter (38) enthält.

15. WDM-Netzwerk nach einem der vorhergehenden Ansprüche, bei welchem die Anzahl von Wellenlängen-Kanäle, welche dem Knoten (2) hinzugefügt werden können, gleich der Anzahl m von Wellenlängen-Kanäle ist, welche am Knoten (2) abgeworfen werden.

16. WDM-Netzwerk nach einem der vorhergehenden Ansprüche, bei welchem die Knoten (2) zu einem Ring-Aufbau verbunden sind.

## Revendications

1. Réseau de télécommunications optique à multiplexage par répartition en longueur d'ondes MRL comprenant une pluralité de noeuds (2) interconnectés par des guides d'ondes à fibres optiques (4, 6) dans lequel le trafic de communication est communiqué entre les noeuds par un rayonnement optique modulé avec le trafic de communication, ledit rayonnement étant divisé en une pluralité N de canaux de longueur d'onde, chaque canal présentant une bande d'onde non chevauchante discrète (λ₁ à λ_{N}), dans lequel chaque noeud (2) comprend des moyens destinés à abandonner au moins un des canaux de longueur d'onde pour de ce fait définir une connexion au dit noeud (2) et comprend des moyens destinés à ajouter au moins un canal de longueur d'onde au réseau pour déterminer une connexion à un autre noeud (2) du réseau, dans lequel au moins un noeud (2) comprend un sous-ensemble fixe Mi des N canaux de longueur d'onde qui lui est affecté, et comprend des moyens (12, 42, 44) destinés à abandonner chacun des canaux de longueur d'onde (λₐ à λ_{d}) du sous-ensemble fixe Mi du réseau ; et des moyens sélectionnables de longueur d'onde (14, 30, 32, 39) capables d'ajouter un ou plusieurs d'au moins un quelconque des canaux de longueur d'onde restants autres que le sous-ensemble Mi au réseau pour définir une connexion à un autre noeud (2) du réseau, **caractérisé en ce que** les canaux (λₐ à λ_{d}) du sous-ensemble Mi sont les seuls canaux qui sont abandonnées au niveau du noeud (2).

2. Réseau MRL selon la revendication 1, dans lequel chaque noeud (2) comprend un sous-ensemble fixe Mi respectif des N canaux de longueur d'onde qui lui est affecté, les canaux (λa à λd) du sous-ensemble Mi respectif étant les seuls canaux qui peuvent être abandonnés au niveau du noeud respectif (2), et comprend des moyens destinés à abandonner chacun de ces canaux de longueur d'onde du réseau ; et chaque noeud (2) comprend en outre des moyens sélectionnables de longueur d'onde destinés à ajouter un ou plusieurs d'au moins un quelconque des canaux de longueur d'onde restants autres que le sous-ensemble Mi respectif au réseau.

3. Réseau MRL selon la revendication 1 ou la revendication 2, dans lequel les moyens destinés à ajouter lesdits un ou plusieurs canaux de longueur d'onde comprennent au moins un émetteur sélectionnable en longueur d'onde (32).

4. Réseau MRL selon la revendication 3, dans lequel le, ou chaque, émetteur sélectionnable en longueur d'onde est sélectionnable en longueur d'onde pour émettre sur un quelconque des N longueurs d'ondes (λ₁ à λ_{N}).

5. Réseau MRL selon la revendication 3 ou la revendication 4, dans lequel le, ou chaque, émetteur sélectionnable en longueur d'onde comprend un laser réglable.

6. Réseau MRL selon l'une quelconque des revendications 3 à 5, dans lequel le, ou chaque, émetteur comprend en outre un atténuateur optique variable (VOA) destiné à commander la puissance du canal de longueur d'onde.

7. Réseau MRL selon l'une quelconque des revendications précédentes, dans lequel les canaux de longueur d'onde (λₐ à λ_{d}) du sous-ensemble fixe Mi sont contigus et comprennent une bande de canaux de longueur d'onde consécutifs.

8. Réseau MRL selon la revendication 7, dans lequel les moyens destinés à abandonner le sous-ensemble Mi de canaux de longueur d'onde (λa à λd) comprennent un filtre de chute à large bande.

9. Réseau MRL selon l'une quelconque des revendications 1 à 6, dans lequel le sous-ensemble Mi comprend une pluralité de canaux de longueur d'onde discrets (λₐ à λ_{d}).

10. Réseau MRL selon la revendication 9, dans lequel les moyens destinés à abandonner le sous-ensemble Mi de canaux de longueur d'onde (λa à λd) comprennent un ou plusieurs filtres sélectifs de longueur d'onde fixes (42, 44).

11. Réseau MRL selon la revendication 10, dans lequel lesdits un ou plusieurs filtres sont adaptés pour abandonner chaque Q^{ième}, où Q > 1, canal de longueur d'onde.

12. Réseau MRL selon l'une quelconque des revendications précédentes, et comprenant en outre des moyens (26, 36, 38) destinés à séparer les canaux de longueur d'onde respectifs du sous-ensemble Mi.

13. Réseau MRL selon les revendications 12, dans lequel les moyens destinés à séparer comprennent un démultiplexeur (26).

14. Réseau MRL selon la revendication 12, dans lequel les moyens de séparateur comprennent un séparateur m-voies (36) et m filtres optiques (38).

15. Réseau MRL selon l'une quelconque des revendications précédentes, dans lequel le nombre de canaux de longueur d'onde qui peut être ajouté au niveau des noeuds (2) est égal au nombre m de canaux de longueur d'onde abandonnés au niveau du noeud (2).

16. Réseau MRL selon l'une quelconque des revendications précédentes, dans lequel les noeuds (2) sont interconnectés dans une configuration d'anneau.
